# EUROPÄISCHE PATENTSCHRIFT

(11) **EP 2 641 679 B1**
(45) Veröffentlichungstag und Bekanntmachung des Hinweises auf die Patenterteilung: **17.10.2018**
(21) Anmeldenummer: 13160635.2
(22) Anmeldetag: 22.03.2013
(51) Int. Cl.: B23B 31/107, B23B 31/00, B23B 31/06

(54) **Schnittstelle zwischen zwei Systemmodulen eines Werkzeugsystems**
Interface between two system modules of a tool system
Interface entre deux modules de système d'un système d'outil

(30) Priorität: 23.03.2012 DE 102012204738; 22.08.2012 DE 102012214923
(43) Veröffentlichungstag der Anmeldung: 25.09.2013
(73) Patentinhaber: Gühring KG, 72458 Albstadt (DE)
(72) Erfinder: MATHEIS, Klaus, 88605 Sauldorf-Rast (DE)
(74) Vertreter: Winter, Brandl, Fürniss, Hübner, Röss, Kaiser, Polte - Partnerschaft mbB

(56) Entgegenhaltungen:
- WO-A1-2007/147711
- WO-A2-2009/137557
- DE-B- 1 004 889
- DE-C- 865 561
- US-A- 4 945 793

## Beschreibung

Die Erfindung betrifft eine Schnittstelle bzw. Trennstelle zwischen zwei Systemmodulen eines Werkzeugsystems, wie zum Beispiel zwischen einem Zerspanungswerkzeug und einem Werkzeughalter oder einer Werkzeughalter-Verlängerung, gemäß dem Oberbegriff des Patentanspruchs 1.

Schnitt- bzw. Trennstellen zwischen zwei Systemmodulen eines Werkzeugsystems sind in vielfacher Ausführung bekannt. Bei Verbindung zwischen einem Werkzeug-Systemmodul und einer Werkzeugmaschinenspindel spricht man dabei häufig von einer sogenannten "Schnittstelle", während man bei lösbaren Kupplungen zwischen Werkzeugsystem-Modulen, die der Werkzeugmaschinenspindel nachgeschaltet sind, von sogenannten "Trennstellen" spricht. Beiden Konstruktionen ist gemeinsam, dass es darum geht, Werkzeugsystem-Module, vorzugsweise drehantreibbare Module durch einfache Betätigungshandgriffe fluchtungs- und planschlaggenau miteinander zu verspannen und bei Bedarf mit einfachen Handgriffen voneinander zu lösen, um die Systemmodule des Werkzeugsystem austauschen zu können.

Während bei Schnittstellen, wie zum Beispiel gemäß Dokument EP 1 295 675 B1, häufig ein zentraler Zugbolzen dazu herangezogen wird, einen mit einem konischen Zapfen versehenen Werkzeughalter in eine konische Ausnehmung einer Maschinenspinde zu ziehen, kommt es bei sogenannten Trennstellen darauf an, die Spannmimik durch eine radiale Betätigung von außen mit einfachen Handgriffen zu betätigen.

Hierzu wird beispielsweise bei dem Werkzeughalter-System gemäß DE 203 19 597 U1 ein Paar von radial in ein erstes Systemteil einschraubbaren Kegelstiften verwendet, die in entsprechende Radialdurchbrüche eines konusförmigen Vorsprungs des anderen Systemmoduls eingreifen.

Gemäß dem Dokument DE 103 26 928 B4 wird die Spannvorrichtung von einem Zugbolzen und einem diesen in axialer Richtung verlagernden Exzenterelement gebildet. Ebenfalls ein diametral zur Achse der Verbindungsstelle eingesetztes Exzenterelement wird in der Spannvorrichtung gemäß EP 0 729 396 B1 verwendet, wobei dieses Exzenterelement eine Spannwelle bildet, mit der beim Spannen kugelförmige Spannelemente von innen nach außen in Ausnehmungen bewegbar sind, um so die beiden Systemmodule miteinander zu verspannen, während bei Umkehrung der Antriebsbewegung der Spannwelle die Spannelemente gegen Druckteile eines Abdruckstücks gepresst werden.

Diese bekannten Systeme erfordern allerdings eine sehr genaue Fertigung der die Spannmimik bildenden Komponenten, um eine symmetrische Krafteinleitung beim Spannen und Abdrücken der Systemmodule voneinander sicherzustellen.

Mittels einer diametral ausgerichteten Antriebsspindel, die endseitig gegensinnige Gewindeabschnitte aufweist, die in Eingriff mit Gewindebohrungen diametral angeordneter und damit synchron bewegbarer Spannelemente zusammenwirken, gelingt es, bei einfacher Betätigung der Spannmimik die Spannkraft symmetrisch einzuleiten. Solche System sind beispielsweise aus den Dokumenten WO 2009/137557 A2 und EP 2 032 295 B1, die den Oberbegriff des Patentanspruchs 1 bildet, bekannt. Beiden bekannten Systemen ist jedoch der Nachteil gemeinsam, dass die Spannmimik einen verhältnismäßig großen axialen Bauraum benötigt und darüber hinaus dazu tendiert, dass die Spannelemente mit der Zeit zum Verkanten neigen. Insbesondere im kleinen Durchmesserbereich, d.h. für Außendurchmesser unter 20 mm, haben diese bekannten Trennstellen Probleme hinsichtlich Präzision und Standzeit.

Der Erfindung liegt deshalb die Aufgabe zugrunde, eine Schnitt- bzw. Trennstelle zwischen zwei Systemmodulen eines Werkzeugsystems, wie zum Beispiel zwischen einem Zerspanungswerkzeug und einem Werkzeughalter oder einer Werkzeughalter-Verlängerung, gemäß dem Oberbegriff des Patentanspruchs 1 derart weiterzubilden, dass sich unter Beibehaltung einer einfachen Betätigung eine kompaktere Bauweise bei gleichzeitiger Vereinfachung der Herstellungskosten realisieren lässt.

Diese Aufgabe wird durch die Merkmale des Patentanspruchs 1 gelöst.

Erfindungsgemäß werden die Führungen für die Spannelemente nicht mehr senkrecht zur Schnittstellenachse, sondern derart geneigt, dass die die Spannelemente antreibende Antriebsspindel bei der Lösebewegung der Spannelemente axial bewegt wird, sodass die Abdrückkraft über die Antriebsspindel auf den Vorsprung der Schnittstelle übertragen werden kann. Durch die Neigung der Führungen für die Spannelemente kann die Führung im Vergleich zum Stand der Technik über eine größere Länge erfolgen, sodass sich günstigere Bedingungen für die Kraftabstützung beim Spannen und beim Lösen bzw. Abdrücken der Systemmodule voneinander ergeben. Gleichzeitig wird die Neigung der Führungen für die Spannelemente in vorteilhafter Weise dazu herangezogen, der Antriebsspindel beim Lösen der Trennstelle eine axiale Bewegungskomponente zum Abdrücken der Systemmodule voneinander zu geben, wobei diese axiale Bewegungskomponente unmittelbar genutzt wird. Auf diese Weise müssen die Spannelemente nicht mehr, wie im Stand der Technik, einen am Ende des axialen Fortsatzes ausgebildeten Spannkopf hintergreifen, wodurch die Formgebung der Spannelemente vereinfacht und zusätzlich axiale Baulänge eingespart wird.

Darüber hinaus ergibt sich der zusätzliche Vorteil, dass sich beim Spannen und beim Lösen achsensymmetrische Kraftverhältnisse ergeben, sodass die Gefahr von Verkantungen der einzelnen Bauteile der Spannmimik weiter reduziert wird.

Weitere vorteilhafte Ausgestaltungen sind Gegenstand der Unteransprüche.

Es hat sich gezeigt, dass der Aufbau der Schnitt- bzw. Trennstelle gemäß Anspruch 1 in besonders wirksamer Weise in der Lage ist, eine Verspannung von Systemmodulen herzustellen, die über einen Konus- und Planflächenkontakt zusammengespannt werden. Bei dieser Art der Verspannung, mit der es gelingt, die zu koppelnden Systemmodule besonders exakt hinsichtlich Rundlauf und biegesteif aneinander zu koppeln, wird die statische Überbestimmtheit der Verbindung über eine elastische Aufweitung des die Ausnehmung ausbildenden Systemmodulabschnitts kompensiert.

Die maximal erzielbare Spannkraft und die erfindungsgemäße Axialbewegung der Antriebsspindel beim Lösen der Spannelemente ist durch den erfindungsgemäßen Aufbau allein durch geeignete Wahl des Neigungswinkels der Führungen für die Spannelemente leicht steuerbar, sodass selbst größte Klemmkräfte im Bereich des Konus-Flächenpaarung erzeugt und auch wieder zuverlässig überwunden werden können. Aufgrund des erfindungsgemäßen Aufbaus lassen sich auch mit Leichtigkeit symmetrische Verhältnisse beim Spannen und auch beim Abdrücken der Systemmodule erzielen, sodass die Spannmimik selbst bei sehr hohen Spann- und Abdrückkräften eine lange Lebensdauer hat.

Mit der Weiterbildung des Anspruchs 3 ergibt sich eine sehr einfache Gestaltung der zum Spannen der Systemmodule erforderlichen hinterschnittenen Schulterabschnitte.

Wenn gemäß Anspruch 4 die hinterschnittenen Schulterabschnitte von ebenen Flächen gebildet sind, können diese Flächen zur Ausrichtung der Spannelemente genutzt werden, wodurch im Spannvorgang die Gefahr von Verkantungen bzw. Verdrehungen der Spannelemente in den Führung weiter verringert wird.

Wenn gemäß Anspruch 5 der axiale Fortsatz einen stirnseitigen diametral und im wesentlichen mittig durch die hinterschnittenen Schulterabschnitte verlaufenden Schlitz hat, durch den sich die Antriebsspindel mit Spielpassung erstreckt, ergibt sich eine weitere Einsparung von axialem Bauraum.. Denn die axiale Länge der abgeflachten Kerbausnehmungen kann für die Anordnung der Antriebsspindel und der Spannelemente in voller Länge ausgenützt werden. Gleichzeitig werden vier über den Umfang im Wesentlichen gleichmäßig verteilte hinterschnittene Schulterabschnitte geschaffen, wodurch sich eine Vergleichmäßigung bei der Spannkrafteinleitung ergibt. Wenn dabei der Schlitzgrund zwei im gleichen Abstand zur Achse des Vorsprungs liegende Abdrückflächen für die Antriebsspindel ausbildet, wird die Herstellung der Abdrückflächen vereinfacht. Über die Tiefe der abgeflachten Kerbausnehmungen im axialen Fortsatz lässt sich die Größe der Abdrückflächen leicht steuern und an die jeweils vorliegenden Randbedingungen hinsichtlich der zu erzeugenden Abdrückkräfte anpassen.

Die Weiterbildung des Anspruchs 6 hat den Vorteil, dass die Flächenpressung an den Abdrückflächen einerseits und an der Antriebsspindel andererseits minimiert wird.

Grundsätzlich ermöglicht es der anmeldungsgemäße Aufbau der Schnitt- bzw. Trennstelle, die hinterschnittenen Schulterabschnitte senkrecht zur Schnittstellenachse auszurichten. Über die Weiterbildung des Anspruchs 8 lässt sich auch die Kraftübersetzung von Antriebsspindel, Spannelement und axialem Fortsatz gezielt Einfluss nehmen.

Mit der Weiterbildung des Anspruchs 9 ergeben sich besonders günstige Verhältnisse für die Krafteinleitung auf die Spannelemente und gleichzeitig der Vorteil, dass der für die Spannmimik benötigte axiale Bauraum weiter verkürzt wird.

Es hat sich gezeigt, dass es mit dem erfindungsgemäßen Aufbau mit Leichtigkeit möglich ist, die Schnittstelle symmetrisch zu einer die Achse der Ausnehmung enthaltenden und auf der Achse der Antriebsspindel senkrecht stehenden Ebene auszubilden, wodurch sich eine weitere Vereinfachung der Fertigungstechnik ergibt. Gleichzeitig ergeben sich automatisch symmetrische Verhältnisse für die Krafteinleitung beim Spannen und beim Lösen der Schnittstelle.

Grundsätzlich ist es möglich, die Spannelemente in beliebiger Formgebung auszugestalten. Eine prismatische Ausgestaltung hat den Vorteil, dass eine möglichst große Fläche für die Führung der Spannelemente zur Verfügung gestellt wird. Die Weiterbildung des Anspruchs 11 ist deshalb besonders vorteilhaft, da die Führung für die Spannelemente durch einen einfachen spanabhebenden Bearbeitungsvorgang, nämlich durch Bohren oder Reiben herstellbar ist.

Die Weiterbildung gemäß Anspruch 14 den besonderen Vorteil, dass der die hinterschnittenen Schulterabschnitte ausbildende axiale Fortsatz im ersten Systemteil zusätzlich stabilisiert wird, wodurch die Krafteinleitung weiter verbessert wird.

Die Weiterbildung des Anspruchs 16 hat den besonderen Vorteil, dass die Spannmimik auch im gelösten Zustand, das heißt auch in einem Zustand, in dem die Spannelemente radial nach außen in eine Position verfahren sind, in der die Führungsflächen für die Spannelemente etwas verkleinert sind, verschiebefest im ersten Systemteil verbleibt, sodass beim erneuten Ansetzen eines Systemmoduls sichergestellt ist, dass der axiale Fortsatz behinderungsfrei an den Spannelementen vorbei in das erste Systemteil eingeschoben werden kann. Dadurch, dass im Fixierstift eine Kreuznut ausgebildet ist, genügt eine 90°-Verdrehung des Fixierstifts, um das aufgrund von Herstellungstoleranzen individuell vorliegende axiale Spiel zwischen Ringwulst und Kreuznut einzustellen.

Wenn die Spannelemente formflüssig in einer zur Schnittstellenachse angestellten kreiszylindrischen Bohrung geführt sind, ist es besonders vorteilhaft, die Schnittstelle gemäß Anspruch 17 auszubilden. Der Führungskörper ist in der Lage, die Spannelemente in der kreiszylindrischen Bohrung in derjenigen Drehlage zu sichern, in der die Achsen der jeweiligen Gewindebohrungen für den Eingriff der gegensinnigen Gewindeabschnitte der Antriebsspindel miteinander fluchten. Wenn die Schnittstelle gelöst ist, d. h. wenn die Systemmodule voneinander getrennt sind, und sich die Spannelemente in der auseinander gefahrenen Stellung befinden, verhindert der Führungskörper ein unbeabsichtigtes Verdrehen der Spannelemente, die in dieser Position nur noch über einen Bruchteil ihrer Mantelfläche in der zylindrischen Bohrung gehalten sind. Auf diese Weise kann wirksam ausgeschlossen werden, dass sich das betreffende Spannelement mit der kreiszylindrischen Bohrung und/oder dem Gewindeeingriff mit der Antriebsspindel verkantet oder verkeilt. Auf diese Weise wird das erneute Zusammenspannen der Systemteile erheblich vereinfacht, da zusätzliche Handgriffe zur Ausrichtung der Spannelemente entfallen können.

Ein besonderer Vorteil ergibt sich dabei mit der Weiterbildung des Anspruchs 18. In diesem Fall wird dem Führungskörper die weitere Funktion übertragen, einen Anschlag für die Radialverschiebung der Spannelemente zu bilden. Auf diese Weise wird zuverlässig sichergestellt, dass beim Lösen der Schnittstelle eine unbeabsichtigte Trennung von Antriebsspindel und Spannelemente auftritt.

Die Weiterbildung des Anspruchs 19 hat dabei den zusätzlichen Vorteil, dass die Fixierhülse bedingt durch die elastische Vorspannung dazu herangezogen werden kann, die voneinander weggerichtete Lösebewegung der Spannelemente zu beiden Seiten der Schnittstellenachse im Wesentlichen synchron zu halten, so dass die Verspannung der Systemteile auf beiden Seiten gleichzeitig gelöst und die Spannelemente gleichmäßig und symmetrisch zur Mittelebene der Schnittstelle bewegt werden. Die Handhabung der Schnittstelle - insbesondere beim Lösen der Verspannung - wird auf diese Weise weiter vereinfacht.

Wenn die Führungsnut im Spannelement in einem klauenartigen Fortsatz gemäß Anspruch 20 ausgebildet ist, kann die Führungsnut mit einer gleichbleibenden Tiefe ausgebildet werden, wodurch die Herstellung vereinfacht wird.

Die Weiterbildung des Anspruchs 21 eröffnet die Möglichkeit, den klauenartigen Fortsatz zusätzlich zur Führung der Spannelemente bei der radialen Bewegung nach außen heranzuziehen.

Der Anschlag für die radiale Bewegung nach außen wird in besonders einfacher Weise durch die Weiterbildung des Anspruchs 22 durch einen Wandabschnitt der Führungsnut gebildet. Diese Führungsnut ist mit geringem Aufwand frästechnisch herzustellen.

Durch die vorstehend beschriebene erfindungsgemäße Ausgestaltung der Schnittstelle nach den Ansprüchen 17 bis 22 ergibt sich als Nebeneffekt, dass die Spannfläche an den einzelnen Spannelementen unterteilt wird. Mit anderen Worten, zu beiden Seiten des klauenartigen Fortsatzes wird erfindungsgemäß jeweils ein Druckflächenabschnitt ausgebildet, so dass sich erfindungsgemäß eine Spannmimik ähnlich einer 4-Punkt-Spannung sicherstellen lässt. Auf diese Weise wird die Spannkraft über dem Umfang wesentlich gleichmäßiger verteilt, so dass das Biegewiderstandsmoment des Spannsystems keine bevorzugte Hauptachse mehr hat.

Nachstehend wird anhand schematischer Zeichnungen ein Ausführungsbeispiel der Erfindung näher erläutert. Es zeigen:
Fig. 1 eine Schnittansicht der Schnittstelle, wobei die aneinander zu koppelnden Systemmodule schematisiert dargestellt sind;
Fig. 2 die Ansicht gemäß "II" in Fig. 1;
Fig. 3 die Ansicht gemäß "III" in Fig. 1;
Fig. 4 einen Teilschnitt gemäß "IV" - "IV" in Fig. 3;
Fig. 5 eine perspektivische Ansicht der Einzelkomponenten der Spannmimik für die Schnittstelle nach Fig. 1 bis 4;
Figuren 6 und 7 der Figur 1 ähnliche Darstellungen zur Verdeutlichung der Kinematik der Spannvorrichtung;
Fig. 8 in vergrößertem Maßstab eine Seitenansicht des axialen Fortsatzes am Vorsprung des zweiten Systemteils, wobei die hinterschnittenen Schulterabschnitte in Eingriff mit den Spannelementen stehen;
Fig. 9 eine perspektivische Ansicht der Komponenten gemäß Fig. 8;
Fig. 10 eine der Figur 1 entsprechende Schnittansicht (gemäß "X"-"X" in Figur 12) einer weiteren Ausführungsform der erfindungsgemäßen Schnittstelle, wobei die aneinander zu koppelnden Systemmodule wieder schematisiert dargestellt sind;
Fig. 11 die Schnittansicht gemäß "XI"-"XI" in Fig. 12;
Fig. 12 die Ansicht gemäß "XII" in Fig. 10;
Fig. 13 einen Teilschnitt gemäß "XIII" - "XIII" in Fig. 12;
Fig. 14 eine perspektivische Ansicht der Spannmimik für die Schnittstelle nach Fig. 10 bis 13, wobei das die Ausnehmung ausbildende Systemteil weggelassen ist;
Fig. 15 in vergrößerter Darstellung eine Längs-Schnittansicht der Spannmimik gemäß Figur 14;
Fig. 16 und 17 perspektivische Darstellungen der Schnittstelle mit jeweils geringfügig veränderten Blickwinkeln zur Verdeutlichung von Einzelheiten der Komponenten; und
Figur 18 eine perspektivische Ansicht von Teilkomponenten der Schnittstelle gemäß den Figuren 10 bis 17.

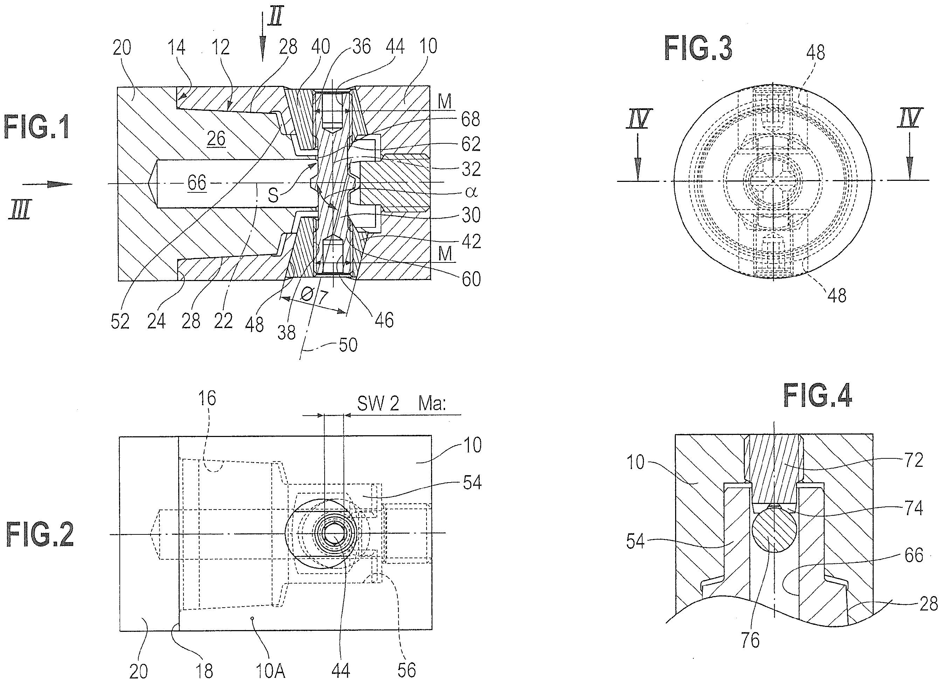

Fig. 1 zeigt die Schnittstelle bzw. Trennstelle zwischen zwei Systemmodulen eines Werkzeugsystems. Ein erster Systemmodul, der beispielsweise von einem Werkzeughalter oder einer Werkzeugverlängerung oder einem anderem Werkzeugsystem-Modul gebildet ist, ist mit dem Bezugszeichen 10 bezeichnet. Bei dem zweiten Systemmodul 20, welcher gegen den ersten Systemmodul lösbar gespannt werden soll, kann es sich um ein Zerspanungswerkzeug, einen Werkzeughalter oder einen anderen Werkzeugsystem-Modul handeln, also beispielsweise um eine weitere Werkzeugverlängerung beispielsweise von Tiefbohrwerkzeugen.

Die Trennstelle muss grundsätzlich in der Lage sein, die Systemmodule bzw. Systemteile 10 und 20 derart miteinander zu verbinden, dass eine drehfeste, biegesteife, rundlaufgenaue und achsgenaue Verbindung zwischen den Systemmodulen 10 und 20 herstellbar wird, wobei eine einfache und schnelle Betätigung des Spannsystems in radialer Richtung manuell oder maschinell ermöglicht sein soll. Die im Folgenden näher zu beschreibende Trennstelle erfüllt diese Kriterien insbesondere bei langen Konstruktionen bzw. langen Werkzeugen und für den kleinen Durchmesserbereich bei Werkzeugen, die für die Feinbearbeitung zum Einsatz kommen, wie zum Beispiel bei Feinfräs- oder Reibwerkzeugen.

Zur Erzielung einer hohen Rundlauf- und Planschlaggenauigkeit zwischen den beiden Systemmodulen 10, 20 erfolgt die Verbindung über eine axial Verpressung der beiden Systemmodule 10, 20 über einen Spannkonus 12 einerseits und eine ringförmige Plan-Anschlagfläche 14 andererseits. Zu diesem Zweck hat der erste Systemmodul 10 eine Ausnehmung 16 in Form eines flachen Innenkonus, der beispielsweise einen Kegelwinkel zwischen 1 und 15° haben kann. Der Innenkonus geht auf der dem Systemmodul 20 zugewandten Seite in eine stirnseitige Planfläche 18 über, die mit präzisem Planschlag zu einer Achse 22 steht, welche die Zentrumsachse der gesamten Schnittstelle und damit der beiden Systemmodule 10, 20 darstellt. Die auf der Zeichenebene der Figur 1 senkrecht stehende und die Achse 22 enthaltende Ebene bildet die Symmetrieebene der erfindungsgemäßen Schnittstelle, was im Folgenden näher erläutert wird.

Komplementär dazu hat der Systemmodul 20, der im folgenden auch Systemteil bezeichnet werden soll, auf der dem Systemteil 10 zugewandten Seite eine ebenfalls ringförmig ausgebildete Anschlag-Planfläche 24, an die sich ein zur Ausnehmung 16 komplementär ausgebildeter Konuszapfen 26 anschließt, dessen Außenkonusfläche mit 28 bezeichnet ist.

Im - wie in Fig. 1 , 6, 8 und 9 - gezeigten - gespannten Zustand liegen die beiden Konus-Passungsflächen 16, 28 vorzugsweise über die gesamte Länge des Konuszapfens aneinander an, wobei gleichzeitig die Anschlag-Planflächen 18 und 24 fest gegeneinander gepresst werden. Auf diese Weise werden die beiden Systemteile 10, 20 nicht nur drehfest miteinander verbunden sondern auch höchstgenau axial positioniert und biegesteif aneinander stabilisiert.

Bei den Passungsflächen 16, 28 handelt es sich vorzugsweise um fein bearbeitete, beispielsweise geschliffene Flächen, wobei die Herstellungstoleranzen so gewählt sind, dass beim Zusammenfügen der beiden Systemteile 10, 20 in jedem Fall ein Tragen der Verbindung im größeren Durchmesserbereich der Konusflächenpaarung stattfindet. Beim Zusammenspannen der beiden Teile 10, 20 dringt der Konuszapfen 26 zunehmend in die Ausnehmung 16 des Systemteils 10 ein, sodass sich ein ringförmiger Abschnitt 10A des die Ausnehmung 16 ausbildenden Systemmoduls 10 elastisch so lange aufweitet, bis die beiden Anschlag-Planflächen 18, 24 aneinander anschlagen. In diesem Zustand, das heißt in diesem gespannten Zustand der Trennstelle, liegen die Außenkonusfläche 28 und der Innenkonus 16 vorzugsweise vollflächig und vorzugsweise mit im Wesentlichen gleicher Kontaktkraft aneinander an.

Um die Systemteile 10, 20 fest aneinander zu spannen und bei Bedarf wieder voneinander zu lösen, ist in die Schnittstelle eine radial von außen betätigbare Spannvorrichtung integriert, die nachfolgend näher beschrieben werden soll.

Die Spannvorrichtung hat als Betätigungselement eine mit dem Bezugszeichen 30 bezeichnete Antriebsspindel mit einer Achse 32, die die Achse 22 der Schnittstelle und damit der Systemmodule 10, 20 senkrecht schneidet. An beiden Enden ist die Antriebsspindel 30 mit gegensinnigen Gewindeabschnitten 34L und 34R ausgestattet, die mit Gewindebohrungen 36, 38 in Spannelementen 40 und 42 funktional zusammenwirken.

Stirnseitig ist die Antriebsspindel 30 mit jeweils einer Profil- oder Mehrkant, z.B. einer Torx- oder Innensechskantausnehmung 44, 46 ausgestattet, um eine Drehantriebsbetätigung der Antriebsspindel 30 mittels eines geeigneten Inbusschlüssels zu ermöglichen.

Die Spannelemente 40, 42 sind spiegelbildlich zu der die Achse 22 enthaltenden und auf der Zeichenebene der Fig. 1 senkrecht stehenden Symmetrieebene ausgebildet. Sie sind jeweils von schräg abgeschnittenen kreiszylinderförmigen Elementen gebildet, die jeweils in einer Führungsbohrung 48 mit Passung verschiebbar aufgenommen sind. Die Besonderheit besteht darin, dass die Führungsbohrung 48 eine Achse 50 hat, welche die Mittelachse 22 der Trennstelle unter einem spitzen Winkel α (siehe Fig. 1) schneidet.

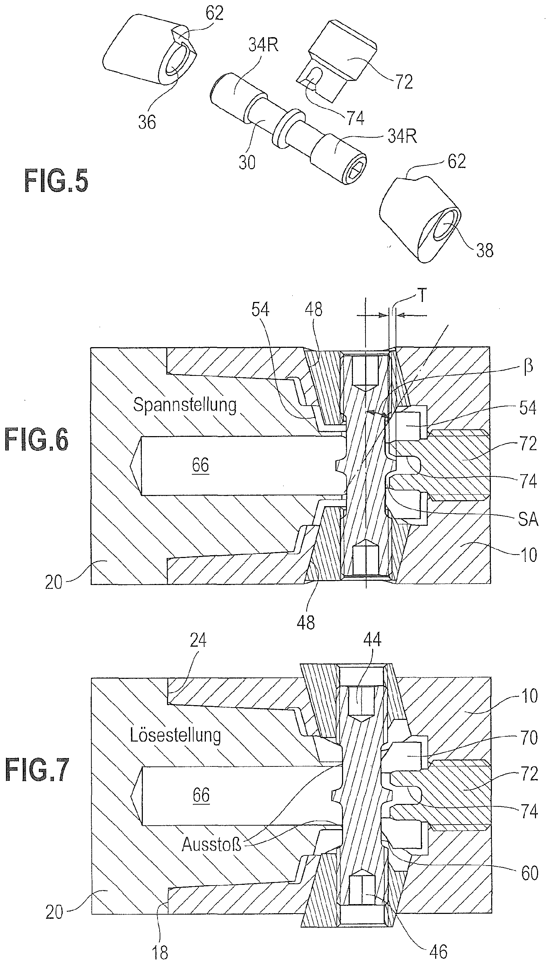

Weil somit der Bewegungsfreiheitgrad der Spannelemente 40, 42 nicht mehr parallel zur Achse 32 der Antriebsspindel 30 liegt, ergibt sich aufgrund der Gegensinnigkeit der Gewindeabschnitte 34L, 34R folgendes:
Wenn die Antriebsspindel 30 gedreht wird, z.B. in einer ersten Richtung, um die locker zusammengefügten (siehe Figur 7) Systemmodule 10, 20 miteinander zu verspannen, wandern die Spannelemente 40, 42 synchron in axialer und gleichzeitig in radialer Richtung aufeinander zu, wobei sie zusammen mit ihrer Bewegung in axialer Richtung die Antriebsspindel 30 mitnehmen. Diese Kinematik wird zum einen, nämlich für den Fall, dass die Spannelemente 40, 42 nach innen bewegt werden, zum Zusammenspannen der Systemteile 10, 20 genutzt und zum anderen beim nach außen bewegen der Spannelemente 40, 42, d.h. wenn die Antriebsspindel in der anderen Richtung angetrieben wird, zum Abdrücken der miteinander verspannten Teile 10, 20 voneinander herangezogen. Dies soll nachfolgend näher erläutert werden.

Aus den Fign. 1 und 2 ist erkennbar, dass der Konuszapfen 26 über eine freigestellte Schulter 52 in einen axialen Fortsatz 54 übergeht, der vorzugsweise mit Fügepassung in eine ebenfalls über eine Schulter abgestufte zylindrische Vertiefung 56 des Systemteils 10 eingreift. Diametral einander gegenüberliegend sind am axialen Fortsatz 54 abgeflachte Kerbausnehmungen 58 ausgebildet, die am besten in den Fign. 6 bis 8 erkennbar sind. Über diese Kerbausnehmungen 58 werden spiegelbildlich zur Achse 22 liegende hinterschnittene Schulterabschnitte 60 ausgebildet, gegen die beim Zusammenspannen der Systemteile 10, 20 im radial nach innen gezogenen Zustand Druckflächen 62 im radial innen liegenden Endbereich der Spannelemente 40, 42 drückbar sind. Im gezeigten Ausführungsbeispiel sind die hinterschnittenen Schulterabschnitte 60 von ebenen Flächen gebildet, sodass es von Vorteil ist, die Druckflächen 62 ebenfalls als ebene Flächen auszubilden. Diese ebene Flächen 62 sind am besten der Fig. 5 entnehmbar.

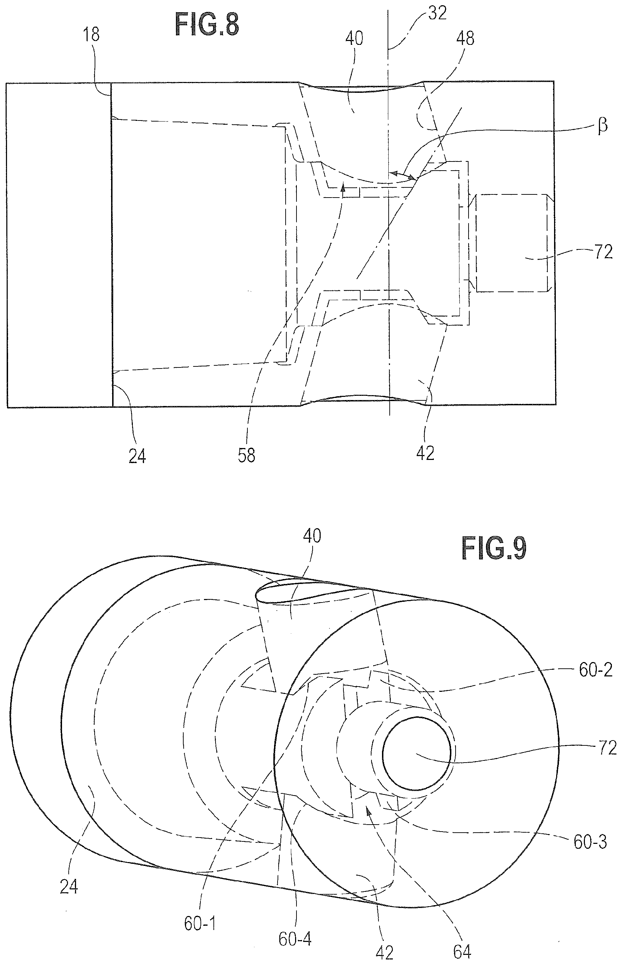

Wie in den Figuren ferner gezeigt, hat der axiale Fortsatz 54 einen stirnseitigen, diametral verlaufenden und im Wesentlichen mittig durch die abgeflachten Kerbausnehmungen 58 und damit mittig durch die hinterschnittenen Schulterabschnitte 60 verlaufenden Schlitz 64, der am besten aus der Fig. 9 erkennbar ist und der so geformt ist, dass sich die Antriebsspindel mit Spiel durch den Schlitz 64 erstrecken kann. Auf diese Weise entstehen vier im Wesentlichen in gleichem Umfangsabstand zueinander liegende hinterschnittene Schulterabschnitte 60-1 bis 60-4 (siehe Figur 9).

An den Schlitz 64 schließt sich eine im Durchmesser etwas größere Innenbohrung 66 an.

Die axiale Tiefe des Schlitzes 64 ist derart festgelegt, dass im gespannten Zustand der Schnittstelle - wie in Fig. 1 gezeigt - ein kleines axiales Spiel S (siehe Fig. 1) zwischen dem Außendurchmesser der Antriebsspindel 30 und einer Fläche 68 des Schlitzgrundes verbleibt. Aufgrund des Umstandes, dass sich der axiale Schlitz 64 in einer Innenbohrung 66 fortsetzt, verbleiben dementsprechend bei der gezeigten Ausführungsform zwei zur Achse 22 symmetrisch angeordnete Flächen 68, welche für den im Folgenden zu beschreibenden Lösevorgang der Schnittstelle die Abdrückflächen ausbilden.

Aus den Zeichnungen etwas schwer erkennbar ist noch der Umstand, dass der Schlitzgrund abgerundet ausgebildet ist, vorzugsweise in Halbkreisform, wobei der Durchmesser im Wesentlichen dem Durchmesser der Antriebsspindel 30 entspricht. Es entstehen auf diese Weise Abdrückflächen 68 in Form von die Antriebsspindel über einen Zentriwinkel von 180° umgebenden Zylindermantelflächen-Segmenten, wobei die radiale Erstreckung der Abdrückflächen durch die Tiefe der abgeflachten Kerbausnehmungen 58 einerseits und den Durchmesser der Innenbohrung 66 andererseits bestimmt wird. Es hat sich gezeigt, dass es für eine Bereitstellung einer langlebigen Spannvorrichtung bereits genügt, die radiale Erstreckung der Abdrückflächen 68 im Millimeterbereich festzulegen.

Die Figuren 1 und 8 zeigen, dass die Schulterabschnitte 60 und ebenfalls die Druckflächen 62 an den Spannelementen 40, 42 so angeordnet sind, dass sie mit der Achse 32 der Antriebsspindel 30 einen spitzen Winkel β einschließen. Es soll jedoch an dieser Stelle bereits hervorgehoben werden, dass es aufgrund der geneigten Anordnung der Führungsbohrungen 48 auch möglich ist, diese Flächen 60 und 62 senkrecht zur Schnittstellenachse 22 anzuordnen.

Zum Lösen der Verbindung zwischen den Systemmodulen 10 und 20 wird die Antriebsspindel 30 in die zur Spannbewegung entgegen gesetzte Richtung gedreht. Dadurch wandern die Spannelemente 40, 42 wiederum synchron in den Führungsbohrungen 48, jetzt radial nach außen, sodass zunächst der Flächenkontakt zwischen den hinterschnittenen Schulterabschnitten 60 und den Druckflächen 62 der Spannelemente 40, 42 aufgehoben wird. Bei der radialen Bewegung der Spannelemente 40, 42 nach außen bewegen sich die Spannelemente 40, 42 bedingt durch den Neigungswinkel α gleichzeitig in axialer Richtung auf das zweite Systemteil 20 zu. Das axiale Spiel S zwischen dem Außenumfang der Antriebsspindel 30 und den Abdrückflächen 68 des axialen Fortsatzes 54 wird damit allmählich aufgebraucht, und wird schließlich zu NULL.

Wenn die Antriebsspindel 30 in Löserichtung weitergedreht wird, drücken die Spannelemente 40, 42 die Antriebsspindel 30 mit immer größer werdender Kraft gegen die von Zylindermantelflächen-Segmenten gebildeten Abdrückflächen 68 und schieben somit den Konuszapfen 26 aus dem Innenkonus 16 des ersten Systemteils bzw. Systemmoduls 10 heraus, sodass die Spannvorrichtung die in Fig. 7 gezeigte Lösestellung erreicht, in der der Flächenpressungskontakt im Bereich des Spannkonus 12 wieder vollständig aufgehoben ist und sich die Anlage-Planflächen 18 und 24 mit axialem Spiel gegenüber liegen.

Die beiden Systemmodule 10, 20 können voneinander getrennt werden, sobald die Spannelemente 40, 42 - wie in Fig. 7 gezeigt - radial so weit auseinander gefahren sind, dass die Endabschnitte 70 des axialen Fortsatzes 54 des Konuszapfens 26 an der Innenkante der Spannelemente 40, 42 vorbeibewegt werden können. Dieser Zustand ist in Fig. 7 gezeigt.

Um zu verhindern, dass die im Systemteil 10 verbleibenden Komponenten der Spannvorrichtung, beispielsweise bei einer Handhabung in automatischen Werkzeugwechselsystemen, in radialer Richtung unbeabsichtigt verlagert werden, was ein erneutes Ansetzen des Systemmoduls 20 verzögern könnte, ist im ersten, das heißt die Spannelemente 40, 42 aufnehmenden Systemteil 10 ein Fixierstift 72 eingeschraubt, der stirnseitig eine Kreuznut hat, wie am besten in Fig. 4, 6 und 7 gezeigt.

Die Kreuznut 74 wirkt mit einem mit dem Bezugszeichen 76 versehenen Ringteil zusammen, welches an der Antriebsspindel 30 vorgesehen ist. Das Ringteil ist an der Antriebsspindel 30 mittig um umlaufend angeordnet. Es kann auch einstückig mit der Antriebsspindel ausgebildet sein, wie im gezeigten Ausführungsbeispiel sodass eine umlaufende Ringwulst 76 entsteht, welche in vier um 90° zueinander versetzten Drehstellungen des Fixierstifts mit jeweils einer Nut der Kreuznut 74 zusammenwirken.

Die Tiefe des Eingriffs zwischen Ringwulst 76 und Kreuznut 74 ist dabei so festgelegt, dass der Fixierstift in der Spannstellung (Fig. 6) die axiale Bewegung der Antriebsspindel 30 nicht behindert, dass also ein axiales Spiel SA zwischen Fixierstift 72 und Antriebsspindel 30 aufrechterhalten bleibt. Andererseits ist die Eindringtiefe der Ringwulst 76 in die Kreuznut 74 so festgelegt, dass die Ringwulst 76 in der Lösestellung (Fig. 7) der Spannvorrichtung noch in der Kreuznut 74 gefangen bleibt, wie in Fig. 7 dargestellt.

Die Vorteile der vorstehend beschriebenen Schnittstelle liegen insbesondere darin, dass es mit einem sehr kleinen axialen Bauraum gelingt, große Spann- und Abdruckkräfte zu erzeugen. Ferner besteht eine Besonderheit darin, dass sich die Verspannung nicht negativ auf die konzentrische und rundlaufgenaue Ankopplung der beiden Systemmodule 10 und 20 auswirkt. In diesem Zusammenhang ist auch der Umstand hervorzuheben, dass der axiale Fortsatz 54 des Konuszapfens hinter den Schulterabschnitten 60 über den Endabschnitt 70 zusätzlich zentriert wird. Ungleichmäßigkeiten bei der Spannbewegung der Spannelemente 40, 46 können sich somit nicht mehr negativ auf die Verspannung und auch auf den Verschleiß der einzelnen Komponenten der Spannmimik auswirken.

Aus Fig. 5 ist erkennbar, dass die Elemente der Spannvorrichtung besonders einfach ausgebildet sind, so dass sich eine wirtschaftliche Herstellung der Trennstelle ergibt. Die Spannelemente 40, 42 sind spiegelsymmetrisch ausgebildet. Die Antriebsspindel 30 ist als rotationssymmetrisches Bauteil gestaltet. Die Führungen für die Spannelemente 40, 42 sind von einfach herzustellenden Bohrungen gebildet, sodass sich die Schnittstelle insgesamt preisgünstig herstellen lässt, zumal auch die Spannelemente 40, 42 auf diese Weise eine einfache geometrische Form erhalten.

Schließlich gelingt es mit einfachen Mitteln, die Schnittstelle an die jeweils vorliegenden Randbedingungen hinsichtlich Spann- und Abdrückkraft anzupassen, indem lediglich der Neigungswinkel α der Führungen 48 entsprechend geändert bzw. an die Neigung β der Druckflächen 62 in geeigneter Weise angepasst wird.

Selbstverständlich sind Abwandlungen des vorstehend beschriebenen und gezeigten Ausführungsbeispiels möglich, ohne den Grundgedanken der Erfindung zu verlassen. So können beispielsweise die Führungen 48 für die Spannelemente 40, 42 eine andere geometrische Form haben, wie zum Beispiel prismenförmig ausgebildet sein, wobei die Kanten des Führungsquerschnitts abgerundet sein können.

Die Schnittstelle ist auch grundsätzlich für eine zentral Kühlmittelversorgung geeignet, indem Kühl-/Schmiermittel über eine zentrale Bohrung im Fixierstift zugeführt und über die Bohrung 66 im Konuszapfen 26 zum angeschlossenen Systemmodul 20 weitergeleitet wird. Die Kühl-/Schmiermittelversorgung des Systemmoduls 20 kann auch über die Anschlag-Planflächen 24, 18 erfolgen, da erfindungsgemäß durch den Eingriff der Antriebsspindel 30 in den diametralen Schlitz 64 im axialen Fortsatz 54 eine feste Drehlagefixierung zwischen den zu koppelnden Systemmodulen 10, 12 gegeben ist.

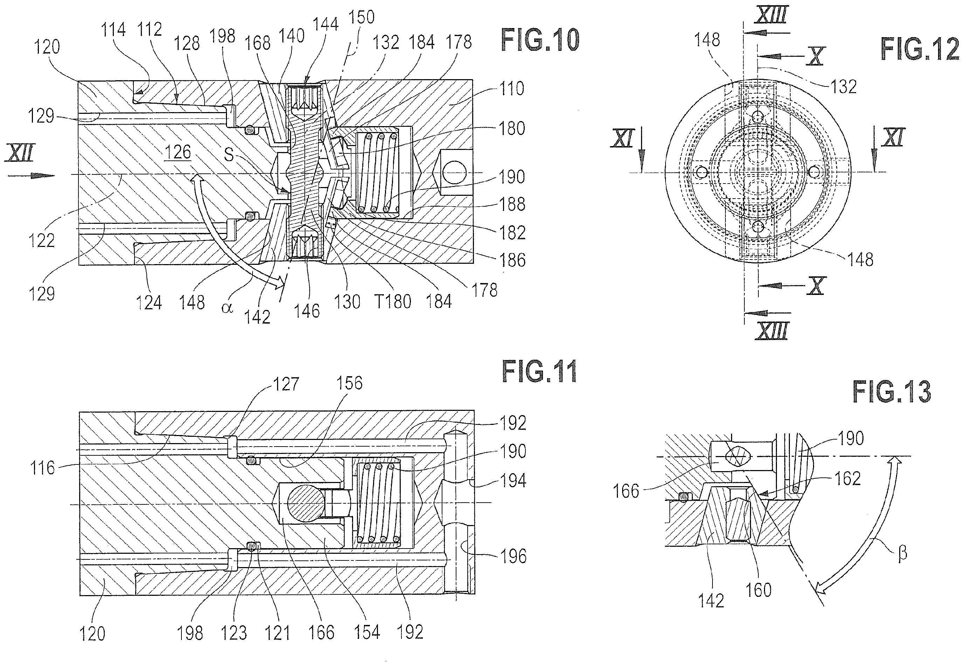

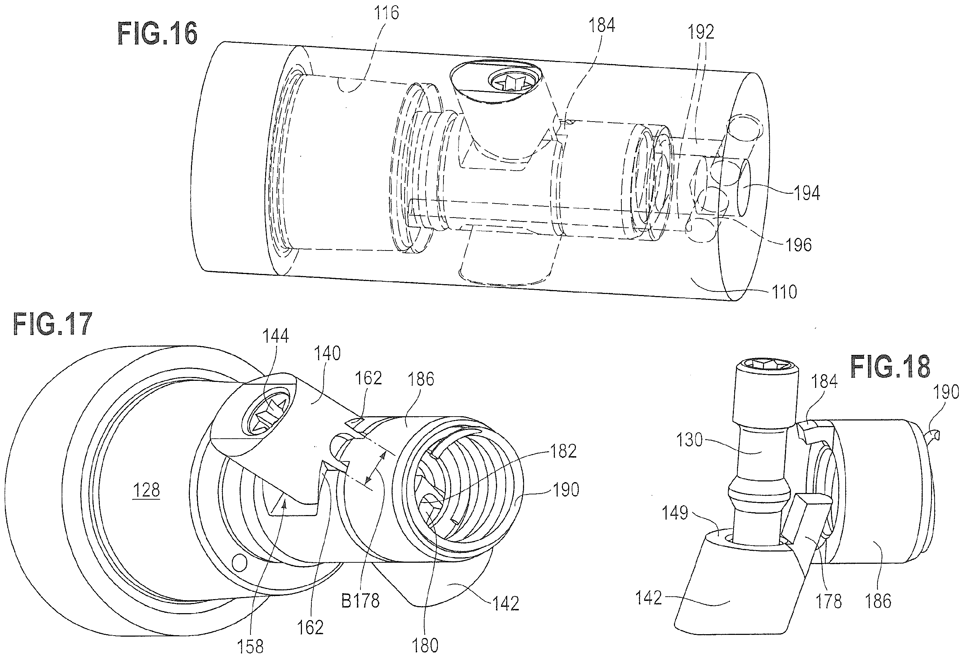

Nachstehend wird anhand der Figuren 10 bis 18 ein weiteres Ausführungsbeispiel der erfindungsgemäßen Schnittstelle beschrieben. Zur Vereinfachung und zur Verkürzung der Beschreibung sind diejenigen Bauteile der weiteren Ausführungsform, die dem Komponenten der vorstehend beschriebenen Ausführungsform entsprechen, mit ähnlichen Bezugszeichen versehen, denen allerdings eine "1" vorangestellt ist. Zur Beschreibung der Funktion dieser Komponenten kann auf die vorstehende Beschreibung der Ausführungsform der Figuren 1 bis 9 verwiesen werden.

Wesentliche Unterschiede zwischen der Schnitt-/Trennstelle nach den Figuren 1 bis 9 und der Schnitt-/Trennstelle nach den Figuren 10 bis 18 bestehen zum Einen in der Gestaltung der Spannmimik, insbesondere in der Gestaltung der Spannelemente 140, 142, in der Art und Weise, wie die Spannmimik positioniert wird, und in der Art und Weise, wie eine Kühlmittelversorgung über die Schnittstelle hinweg bereitgestellt wird.

Die Spannelemente 140, 142 sind - ebenso wie bei der zuvor beschriebenen Ausführungsform - den Führungsbohrungen 148 mit Passung aufgenommen. Erneut hat die Führungsbohrung 148 eine Achse 150, welche die Mittelachse 122 der Trennstelle/Schnittstelle unter einem spitzen Winkel α (siehe Fig. 10) schneidet.

Die Spannelemente 140, 142 sind ebenfalls schräg abgeschnittene kreiszylinderförmige Elemente. Abweichend von der zuvor beschriebenen Ausführungsform hat jedes Spannelement 140, 142 auf der radial innen liegenden Seite einen klauenartigen Fortsatz 178, der sich parallel zur Achse 150 des das Spannelement 140, 142 einfassenden Kreiszylinders 149 erstreckt. Wie aus Fig. 10 ersichtlich, reichen die klauenartigen Fortsätze 178 nahe an die Mittelachse bzw. Symmetrieebene 122 der Schnittstelle/Trennstelle heran.

In den klauenartigen Fortsätzen 178 ist jeweils eine Führungsnut 180 ausgebildet, vorzugsweise eingefräst, die auf der radial innen liegenden Seite an einer Begrenzungswand 182 endet. Die Führungsnut 180 hat über ihre gesamte Länge eine gleich bleibende Breite und vorzugsweise eine gleich bleibende Tiefe T180 (vergleiche Fig. 10). In diese Führungsnut 180 greift jeweils mit Spielpassung ein nockenartiger Fortsatz 184 eines mit 186 bezeichneten Führungskörpers ein. Der Führungskörper ist tassenförmig bzw. hülsenförmig gestaltet, wobei seine Achse mit der Mittelachse 122 der Schnittstelle zusammenfällt. Die auf diese Weise ausgebildete Fixierhülse 186 ist in einer Passungsbohrung bzw. Passungsausnehmung 188 axial gleitend bewegbar geführt und durch eine innen liegende Druckfeder 190, die sich am Boden der Passungsausnehmung 188 abstützt, auf die Spannelemente 140, 142 zu gespannt, so dass die Führungsnocken 184 ständig gegen den jeweiligen Grund der Führungsnut 180 im zugehörigen Spannkörper 140, 142 gedrückt werden.

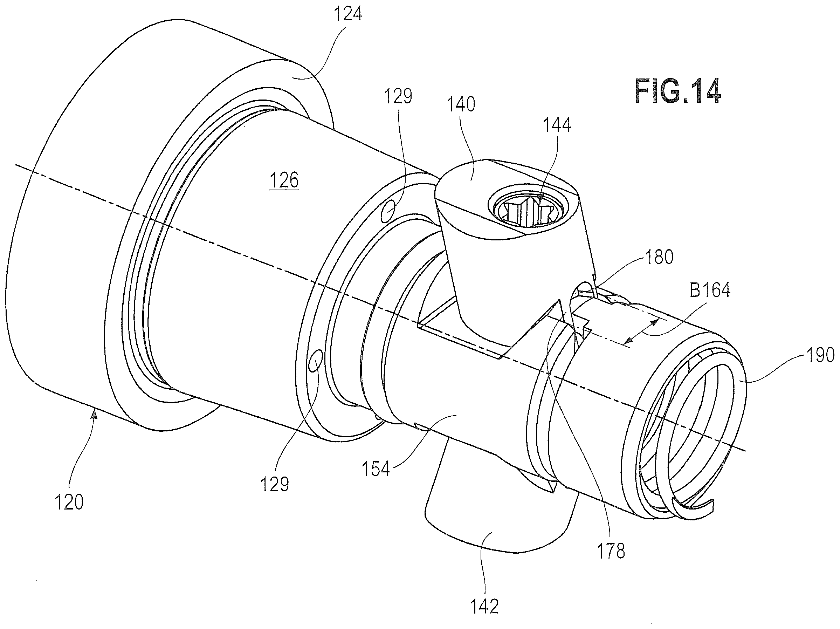

Wie man am besten aus den Figuren 14, 16 und 17 erkennt, hat der klauenartige Fortsatz 178 eine Breite B178, die geringfügig kleiner ist als die Breite B164 des durch die hinterschnittenen Schulterabschnitte 160 des axialen Fortsatzes 154 verlaufenden Schlitzes 164. Vorzugsweise wird der Fortsatz 178 mit Gleitspiel im Schlitz 164 aufgenommen.

In weiterer Abwandlung zur Ausführungsform nach den Fig. 1 bis 9 ist die Schnittstelle/Trennstelle nach den Figuren 10 bis 18 so ausgebildet, dass über die Trennstelle/Schnittstelle hinweg eine Kühl-/Schmiermittelversorgung ausgebildet wird. Hierzu sind im Systemteil 110, das beispielsweise von einer Werkzeugaufnahme gebildet ist, zwei axiale Kühl-/Schmiermittelkanäle 192 ausgebildet, in die über eine Zentralbohrung 194 und einen radialen Stichkanal 196 Kühl- bzw. Schmiermittel eingespeist werden kann. Die Kühlmittelkanäle 192 münden in einen Ringraum 198, der sich vor einer Stirnfläche 127 des konischen Vorsprungs 126 des Systemteils 120 befindet. Von der Stirnseite 127 gehen mehrere, im gezeigten Ausführungsbeispiel 4 über den Umfang gleichmäßig verteilte Kühl-/Schmiermittelkanäle 192 aus.

Über die Konusflächenpaarung 126, 128 wird der Ringraum 198 nach außen abgedichtet. Auf der anderen Seite erfolgt die Abdichtung über einen O-Ring 123, der in einer Ringnut 121 des axialen Fortsatzes 154 aufgenommen ist und sich gegen die Innenoberfläche der Führungsausnehmung 156 für den axialen Fortsatz 154 andrückt.

Selbstverständlich sind die Nocken 184 diametral zueinander versetzt, so dass sich der Führungskörper 186 zwängungsfrei derart ausrichten kann, dass die Nocken 184 bei einer radialen Bewegung der Spannelemente 140, 142 nach innen oder außen eine Führungsfunktion übernehmen können.

Man erkennt am besten auf der Darstellung gemäß Fig. 14, dass aufgrund dieser Gestaltung der Spannelemente 140, 142 zu beiden Seiten des klauenartigen Fortsatzes 178 je eine Abdrückfläche 162 (vergleiche Fig. 13) ausgebildet wird, die mit jeweils einer entsprechenden Gegenfläche 160 am axialen Fortsatz des anzuspannenden Systemteils 120 zusammenwirkt. Beim Spannen der Trennstelle/Schnittstelle werden somit 4 Flächenpaarungen 160, 162 gegeneinander gespannt, so dass sich eine Spannung nach dem Prinzip einer 4-Punkt-Spannung ergibt.

Weil die vier Flächenpaarungen 160, 162 im nahezu gleichmäßigen Umfangs-Winkelabstand zueinander stehen, ergibt sich eine über den Umfang verhältnismäßig gleichmäßig verteilte Spannkraft und der zusätzliche Vorteil, dass die Schnittstelle/Trennstelle in allen Ebenen ein vergleichmäßigtes Biegewiderstandsmoment hat.

Bei der Montage der Spannmimik der Ausführungsform nach den Figuren 10 bis 18 für die vorstehend beschriebene Schnittstelle/Trennstelle geht man wie folgt vor:
Zunächst wird in die kreiszylindrische, zentrische Innenausnehmung 188 des Systemteils 110, das beispielsweise von einer Werkzeugaufnahme gebildet ist, die Druckfeder 190 zusammen mit dem Führungskörper 186 eingesetzt. Anschließend werden die beiden Spannkörper 140, 142 an den radial äußeren Rand der kreiszylindrischen Ausnehmungen 148 im Systemteil 110 angesetzt, wobei die Antriebsspindel 130 mit ihren gegensinnigen Gewindeabschnitten 134 L, 134 R den Rand der Gewindegänge 136, 138 der Spannkörper 140, 142 erfasst. Die Gewindespindel erstreckt sich diametral durch das Systemteil 110 hindurch. Die klauenartigen Fortsätze 178 liegen in dieser Position der Spannelemente 140, 142 radial soweit außen, dass sie die Führungsbohrung 188 noch nicht erreichen. Wenn nun die Antriebsspindel 130 angetrieben wird, wandern die beiden Spannelemente 140, 142 radial nach innen. In diesem Moment wird mittels eines geeigneten Werkzeugs der Führungskörper 186 gegen die Kraft der Feder 190 verschoben, so dass die klauenartigen Fortsätze 178 soweit radial weiter nach innen wandern können, dass das radial innenliegende Ende (Wand 182) der Führungsnut 180 radial innerhalb der Nocken 184 zu liegen kommt. Nach einem gegebenenfalls erforderlichen Dreh-Nachjustieren des Führungskörpers 186 kann das Werkzeug, mit dem der Führungskörper 186 gegen die Kraft der Feder 190 verschoben worden ist, freigegeben werden, so dass die Feder 190 den Führungskörper 186 und damit die Nocken 184 in die beiden Führungsnuten 180 hineindrückt, bis diese an der Führungsnut 180 anliegen. In dieser Stellung liegen die beiden Spannelemente 140, 142 radial noch so weit außen, dass das zweite Systemteil bzw. der zweite Systemmodul 120, der beispielsweise von einem Werkzeug gebildet ist, mit seinem axialen Fortsatz 154 und dem stirnseitigen, diametralen Schlitz 164 in das Systemteil 110 in eine Vor-Spannposition eingeschoben werden kann. In dieser Position umgreift der stirnseitige, diametrale Schlitz 164 die beiden klauenartigen Fortsätze 178 und kann ab diesem Moment für die Spannelemente 140, 142 eine Führungsfunktion übernehmen.

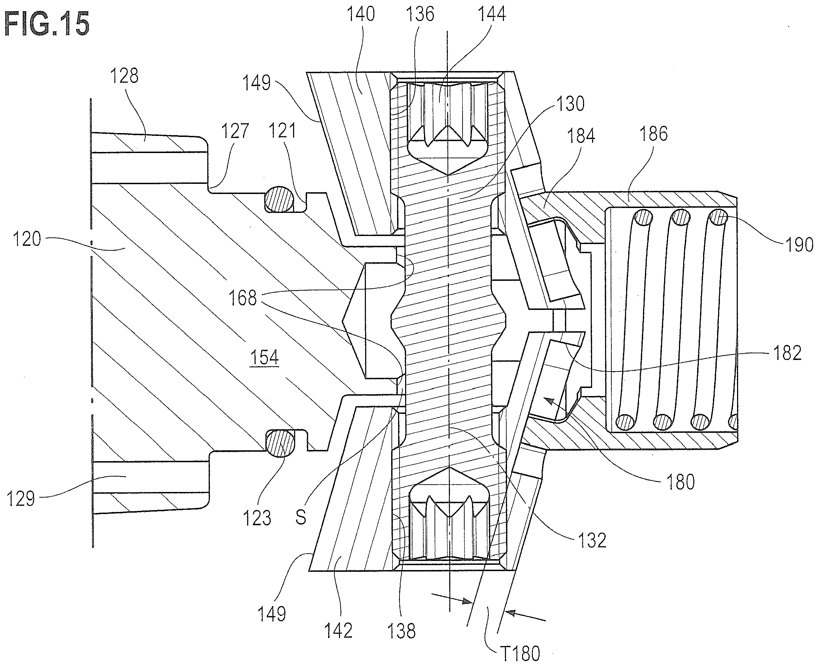

Wenn die Antriebsspindel 130 nun in Spannrichtung weiterbewegt wird, wandern die Spannelemente 140, 142 radial schräg nach innen, bis sie allmählich die in den Figuren 10 und 15 gezeigte Spannposition erreichen, in der die Druckflächen 162 mit den hinterschnittenen Schulterabschnitten 160 (siehe Fig. 13) in Druckkontakt, vorzugsweise in einen flächenartigen Druckkontakt gelangen. Dadurch wird der Systemmodul 120, beispielsweise das Werkzeug, mit seinem Spankonus 128 in die konusartige Ausnehmung 116 gezogen, bis die beiden Ring- Stirnflächen 114, 124 der Systemmodule 110, 120 fest aneinander anliegen. Die Systemteile 110, 120 sind in diesem Moment zusammen gespannt.

Zum Lösen der Schnittstelle - die sich im gespannten Zustand gemäß Figur 15 befindet - wird die Antriebsspindel 130 in der entgegen gesetzten Richtung gedreht. Die Spannelemente 140, 142 wandern in den schrägen kreiszylindrischen Bohrungen 148 nach außen, so dass gleichzeitig die Antriebsspindel 130 in axialer Richtung (gemäß Fig. 15 nach links) verschoben wird. Das axiale Spiel S zwischen der zylindrischen Außenoberfläche der Antriebsspindel 130 und den Zylindermantelflächen-Segmenten 168 (siehe Fig. 10 und Fig. 15) wird allmählich kleiner, bis die Antriebsspindel 130 schließlich die Zylindermantelflächen-Segmente 168 erreicht. Bei weiterem Antrieb der Antriebsspindel 130 drückt die Antriebsspindel 130 über die Flächen 168 den Systemmodul 120 vom Systemmodul 110 ab.

Die Antriebsspindel 130 wird noch solange weiterbewegt, bis die Spannelemente 140, 142 soweit radial nach außen bewegt sind, dass der axiale Fortsatz mit dem endseitigen, diametralen Schlitz an den Spannelementen 140, 142 vorbeibewegt werden kann. Ein zu weites nach außen bewegen der Spannelemente 140, 142 wird dadurch verhindert, dass schließlich die Nocken 184 an den Nutwänden 182 der Führungsnut 180 anschlagen. Aufgrund des ständigen Flächenkontakts zwischen Führungsnut 180 und Nocken 184 wird zugleich sicher gestellt, dass die Spannelemente 140, 142 synchron in radialer Richtung bewegt werden.

Selbstverständlich sind Abwandlungen der vorstehend beschriebenen und gezeigten Ausführungsbeispiele möglich, ohne den Grundgedanken der Erfindung zu verlassen.

Zusätzlich zu der Verspannung der beiden Teile 10, 20, 110, 120 über den Spannkonus und die Anschlag-Planflächen können auch zusätzliche Maßnahmen für die Drehmomentübertragung zwischen den Systemmodulen 10, 20, 110, 120 getroffen sein, beispielsweise dadurch, dass entweder in den ringförmigen Anschlag-/Planflächen und/oder im Bereich der Schulter 52, 152 Mitnehmervorsprünge ausgebildet werden.

Anstelle einer Antriebsspindel 30, 130 mit gegensinnig arbeitenden Gewindeabschnitten 34L, 34R, 134L, 134R ist es auch möglich, eine Differenzialgewindespindel mit gleichsinnigen Gewindeabschnitten unterschiedlicher Steigung zu verwenden.

Bei den gezeigten Ausführungsbeispielen ist der axiale Fortsatz 54, 154 einstückig mit dem Konuszapfen 26, 126 ausgebildet. Es ist jedoch gleichermaßen möglich, den axialen Fortsatz als spezielles Bauteil lösbar mit dem Konuszapfen 26, 126 zu verbinden.

Auch hinsichtlich der Größe der Spannelemente 40, 42, 140, 142 sind in weiten Grenzen Variationen möglich. Der Kontakt zwischen den Druckflächen 62 und den hinterschnittenen Schulterabschnitten 60 ist auch nicht notwendiger Weise flächig auszubilden.

## Patentansprüche

1. Schnittstelle zwischen zwei Systemmodulen (10, 20; 110, 120) eines Werkzeugsystems, wie z.B. zwischen einem Zerspanungswerkzeug und einem Werkzeughalter oder einer Werkzeughalter-Verlängerung, mit einem eine axiale, vorzugsweise zentrische Ausnehmung (16; 116) mit einer Zentrumsachse (22) aufweisenden ersten Systemteil (10; 110), an das vorzugsweise zentriert über einen in die Ausnehmung (16; 116) vorzugsweise formschlüssig eingreifenden Vorsprung (26; 126) ein zweites Systemteil (20; 120) mittels einer Spannvorrichtung (30 bis 64; 130 bis 164) spannbar ist, die zwei mittels einer diametral ausgerichteten Antriebsspindel (30; 130) gegensinnig antreibbare und im ersten Systemteil (10; 110) formschlüssig in Führungen (48; 148) bewegbare Spannelemente (40, 42; 140, 142) hat, welche in ihrer radial innenliegenden Spannstellung (Fig.1, Fig.6; Fig. 10, Fig. 15) jeweils gegen einen hinterschnittenen Schulterabschnitt (60; 160) eines an den Vorsprung (26; 126) zugfest angeschlossenen axialen Fortsatzes (54; 154) drücken, wobei die Lösebewegung der Spannelemente (40, 42; 140, 142) zur Erzeugung einer Abdrückkraft zum Abdrücken der Systemmodule (10, 20; 110, 120) voneinander genutzt wird, **dadurch gekennzeichnet, dass** die Führungen (48; 148) für die Spannelemente (40, 42; 140, 142) zur Achse (32; 132) der Antriebsspindel (30; 130) derart geneigt sind, dass die Antriebsspindel (30; 130) bei der Lösebewegung der Spannelemente (40, 42; 140, 142) zur Übertragung der Abdrückkraft auf den Vorsprung (26, 54; 126, 154) axial in Richtung der Zentrumsachse (22) bewegbar ist.

2. Schnittstelle nach Anspruch 1, **dadurch gekennzeichnet, dass** die Ausnehmung von einem Innenkonus (16; 116) und der Vorsprung von einem komplementären Konuszapfen (26; 126) gebildet ist, der von einer vorzugsweise radial ausgerichteten Stirnfläche (24; 124) ausgeht, welche beim Zusammenspannen der beiden Systemmodule (10, 20; 110, 120) unter elastischer Aufweitung des die Ausnehmung (16; 116) ausbildenden Systemmodulabschnitts (10A; 110A) gegen eine stirnseitige Anschlagfläche (18; 118) des anderen Systemmoduls (10; 110) drückbar ist.

3. Schnittstelle nach Anspruch 1 oder 2, **dadurch gekennzeichnet, dass** der axiale Fortsatz (54; 154) von einem zum Vorsprung (26; 126) konzentrischen und im Durchmesser (Schulter 52; 152) verringerten im Wesentlichen kreiszylindrischen Teil gebildet ist, an dem diametral zueinander versetzt vorzugsweise abgeflachte Kerbausnehmungen (58; 158) zur Ausbildung der hinterschnittenen Schulterabschnitte (60; 160) ausgebildet sind.

4. Schnittstelle nach Anspruch 3, **dadurch gekennzeichnet, dass** die hinterschnittenen Schulterabschnitte (60; 160) jeweils von - gegebenenfalls unterteilten - ebenen Flächen gebildet sind.

5. Schnittstelle nach einem der Ansprüche 1 bis 4, **dadurch gekennzeichnet, dass** der axiale Fortsatz (54; 154) einen stirnseitigen diametral und im Wesentlichen mittig durch die hinterschnittenen Schulterabschnitte (60; 160) verlaufenden Schlitz (64; 164) hat, durch den sich die Antriebsspindel (30; 130) mit Spielpassung erstreckt, wobei der Schitzgrund zwei im gleichen Abstand zur Achse (22; 122) des Vorsprungs (26; 126) liegende Abdrückflächen (68; 168) für die Antriebsspindel (30; 130) zur Übertragung der Abdrückkraft auf den Vorsprung (26; 126) ausbildet.

6. Schnittstelle nach Anspruch 5, **dadurch gekennzeichnet, dass** die Abdrückflächen von Zylindermantelflächen-Segmenten (68; 168) gebildet sind, die sich zur Übertragung der Abdrückkraft auf den Vorsprung (26; 126) an die Außenoberfläche der Antriebsspindel (30; 130) vorzugsweise über einen Zentriwinkel von annähernd 180° flächig anschmiegen.

7. Schnittstelle nach einem der Ansprüche 1 bis 6, **dadurch gekennzeichnet, dass** die Antriebsspindel (30; 130) in der Spannstellung der Spannelemente (40, 42; 140, 142) einen vorbestimmten axialen Abstand (S) von den Abdrückflächen (68; 168) hat.

8. Schnittstelle nach einem der Ansprüche 1 bis 7, **dadurch gekennzeichnet, dass** die hinterschnittenen Schulterabschnitte (60; 160) mit der Achse (32; 132) der Antriebsspindel (30; 130) einen spitzen Winkel (β) einschließen.

9. Schnittstelle nach einem der Ansprüche 1 bis 8, **dadurch gekennzeichnet, dass** die Spannelemente (40, 42; 140, 142) jeweils im Wesentlichen mittig von einer Gewindebohrung (36, 38; 136, 138) für den Eingriff endseitiger und gegensinniger Gewindeabschnitte (34L, 34R; 134L, 134R) der Antriebsspindel (30; 130) durchdrungen sind.

10. Schnittstelle nach einem der Ansprüche 1 bis 9, **dadurch gekennzeichnet, dass** die Schnittstelle symmetrisch zu einer die Achse (22; 122) der Ausnehmung enthaltenden und auf der Achse (32; 132) der Antriebsspindel (30; 130) senkrecht stehenden Ebene (Schnittebene der Figuren 4 und 11) ausgebildet ist.

11. Schnittstelle nach einem der Ansprüche 1 bis 10, **dadurch gekennzeichnet, dass** die Spannelemente (40, 42; 140, 142) jeweils formschlüssig in einer kreiszylindrischen Bohrung (48; 148) geführt sind.

12. Schnittstelle nach einem der Ansprüche 1 bis 11, **dadurch gekennzeichnet, dass** die Antriebsspindel (30; 130) endseitig eine Profil- oder Mehrkantausnehmung (44, 46; 144, 146) zur Aufnahme eines Betätigungswerkzeugs ausbildet.

13. Schnittstelle nach einem der Ansprüche 1 bis 12, **dadurch gekennzeichnet, dass** der axiale Fortsatz (54; 154) einstückig mit dem Vorsprung (26; 126) ausgebildet ist.

14. Schnittstelle nach einem der Ansprüche 1 bis 13, **dadurch gekennzeichnet, dass** der axiale Fortsatz (54; 154) zumindest abschnittsweise (70; 170) in einer komplementären Ausnehmung (56; 156) im ersten Systemteil (10; 110) mit vorzugsweise umlaufender Fügepassung aufgenommen ist.

15. Schnittstelle nach einem der Ansprüche 4 bis 14, **dadurch gekennzeichnet, dass** die von ebenen Flächen gebildeten hinterschnittenen Schulterabschnitte (60; 160) jeweils mit komplementär ausgebildeten Druckflächen (62; 162) unter Ausbildung eines vorzugsweise flächigen Kontakts zusammenwirken.

16. Schnittstelle nach einem der Ansprüche 1 bis 14, **dadurch gekennzeichnet, dass** die Antriebsspindel (30) mittig eine umlaufende Ringwulst (76) hat, die im gespannten Zustand der Spannelemente (40, 46) mit axialem Spiel SA in eine stirnseitige Kreuznut (74) eines zentral im ersten Systemteil (10) aufgenommenen, vorzugsweise eingeschraubten Fixierstifts (72) mit einer solchen Tiefe (T) eingreift, dass er im gelösten Zustand der Spannelemente (40, 42) noch in der Kreuznut (74) gefangen bleibt.

17. Schnittstelle nach einem der Ansprüche 9 bis 15, **dadurch gekennzeichnet, dass** die Spannelemente (140, 142), die jeweils formschlüssig in einer zur Schnittstellen-Achse (122) angestellten kreiszylindrischen Bohrung (148) geführt sind, mittels eines Führungskörpers (186) gegen Verdrehen in der kreiszylindrischen Bohrung (148) in einer solchen Drehlage gesichert sind, dass die Achsen (132) der jeweiligen Gewindebohrungen (136, 138) für den Eingriff der gegensinnigen Gewindeabschnitte (134L, 134R) der Antriebsspindel (130) miteinander fluchten.

18. Schnittstelle nach Anspruch 17, **dadurch gekennzeichnet, dass** der Führungskörper (186) zusätzlich als Anschlag für die von der Achse (122) der Schnittstelle weg gerichtete Bewegung der Spannelemente (140, 142) dient.

19. Schnittstelle nach Anspruch 17 oder 18, **dadurch gekennzeichnet, dass** der Führungskörper (186) von einer axial mit der Mittelachse (122) der Schnittstelle fluchtend ausgerichteten, axial geführt und auf die Spannelemente (140, 142) zu federnd (Druckfeder 190) vorgespannten Fixierhülse gebildet ist, die mit diametral zueinander versetzt angeordneten Nocken (184) in jeweils eine Führungsnut (180) der Spannelemente (140, 142) eingreift.

20. Schnittstelle nach Anspruch 19, **dadurch gekennzeichnet, dass** die Führungsnut (180) im Spannelement (140, 142) in einem klauenartigen Fortsatz (178) ausgebildet ist, der sich parallel zur Achse (150) des das Spannelement (140, 142) einfassenden Kreiszylinders (149) erstreckt.

21. Schnittstelle nach Anspruch 20, **dadurch gekennzeichnet, dass** der klauenartige Fortsatz (178) eine Breite (B178) hat, die geringfügig kleiner ist als die Breite (B164) eines durch die hinterschnittenen Schulterabschnitte (160) des axialen Fortsatzes (154) verlaufenden Schlitzes (164) ist.

22. Schnittstelle nach Anspruch 20 oder 21, **dadurch gekennzeichnet, dass** die Führungsnut (180) eine gleichbleibende Tiefe (T180) hat und radial innenliegend einen Wandabschnitt (182) ausbildet, der im Zusammenwirken mit dem zugehörigen Nocken (184) des Führungskörpers (186) als Bewegungsanschlag für das betreffende Spannelement (140, 142) dient.

## Claims

1. Interface between two system modules (10, 20; 110, 120) of a tool system, such as, for example, between a cutting tool and a tool retention member or a tool retention member extension, having a first system component (10; 110) which has an axial, preferably central recess (16; 116) having a centre axis (22) and on which preferably in a centred manner via a projection (26; 126) which engages in the recess (16; 116), preferably in a positive-locking manner, a second system component (20; 120) can be clamped by means of a clamping device (30 to 64; 130 to 164) which has two clamping elements (40, 42; 140, 142) which can be driven by means of a diametrically orientated drive spindle (30; 130) in opposite directions and which can be moved in the first system component (10; 110) in a positive-locking manner in guides (48; 148) and which in the radially inner clamping position thereof (Figure 1, Figure 6; Figure 10, Figure 15) in each case press against an undercut shoulder portion (60; 160) of an axial continuation (54; 154) which is connected to the projection (26; 126) in a tension-resistant manner, wherein the release movement of the clamping elements (40, 42; 140, 142) is used to produce a pushback force for pressing the system modules (10, 20; 110, 120) away from each other, **characterised in that** the guides (48; 148) for the clamping elements (40, 42; 140, 142) are inclined with respect to the axis (32; 132) of the drive spindle (30; 130) in such a manner that the drive spindle (30; 130) during the release movement of the clamping elements (40, 42; 140, 142) in order to transmit the pushback force to the projection (26, 54; 126, 154) can be moved axially in the direction of the centre axis (22).

2. Interface according to claim 1, **characterised in that** the recess is formed by an internal cone (16; 116) and the projection is formed by a complementary conical journal (26; 126) which extends from a preferably radially orientated end face (24; 124) which, when the two system modules (10, 20; 110, 120) are clamped together with resilient expansion of the system module portion (10A; 110A) which forms the recess (16; 116), can be pressed against an end-side stop face (18; 118) of the other system module (10; 110).

3. Interface according to claim 1 or 2, **characterised in that** the axial continuation (54; 154) is formed by a substantially circular-cylindrical portion which is concentric relative to the projection (26; 126) and which is reduced in diameter (shoulder 52; 152) and on which there are constructed notch recesses (58; 158) which are preferably flattened so as to be diametrically offset with respect to each other in order to form the undercut shoulder portions (60; 160).

4. Interface according to claim 3, **characterised in that** the undercut shoulder portions (60; 160) are each formed by means of - where applicable sub-divided - planar surfaces.

5. Interface according to any one of claims 1 to 4, **characterised in that** the axial continuation (54; 154) has an end-side slot (64; 164) which extends diametrically and substantially centrally through the undercut shoulder portions (60; 160) and through which the drive spindle (30; 130) extends with a clearance fit, wherein the slot base forms two pushback faces (68; 168) for the drive spindle (30; 130) which are located with the same spacing with respect to the axis (22; 122) of the projection (26; 126) in order to transmit the pushback force to the projection (26; 126).

6. Interface according to claim 5, **characterised in that** the pushback faces are formed by cylinder-covering-face segments (68; 168) which in order to transmit the pushback force to the projection (26; 126) closely fit in a planar manner the outer surface of the drive spindle (30; 130) preferably over a central angle of approximately 180°.

7. Interface according to any one of claims 1 to 6, **characterised in that** the drive spindle (30; 130) in the clamping position of the clamping elements (40, 42, 140, 142) has a predetermined axial spacing (S) with respect to the pushback faces (68; 168).

8. Interface according to any one of claims 1 to 7, **characterised in that** the undercut shoulder portions (60; 160) define an acute angle (β) with the axis (32; 132) of the drive spindle (30; 130).

9. Interface according to any one of claims 1 to 8, **characterised in that** a threaded hole (36, 38; 136, 138) for the engagement of end-side and opposing threaded portions (34L, 34R; 134L, 134R) of the drive spindle (30; 130) extends substantially centrally through the clamping elements (40, 42; 140, 142).

10. Interface according to any one of claims 1 to 9, **characterised in that** the interface is constructed symmetrically with respect to a plane (plane of section of Figures 4 and 11) which contains the axis (22; 122) of the recess and which is perpendicular to the axis (32; 132) of the drive spindle (30; 130).

11. Interface according to any one of claims 1 to 10, **characterised in that** the clamping elements (40, 42; 140, 142) are each guided in a positive-locking manner in a circular-cylindrical hole (48; 148).

12. Interface according to any one of claims 1 to 11, **characterised in that** the drive spindle (30; 130) forms at the end side a profiled or polygonal recess (44, 46; 144, 146) for receiving an actuation tool.

13. Interface according to any one of claims 1 to 12, **characterised in that** the axial continuation (54; 154) is constructed integrally with the projection (26; 126).

14. Interface according to any one of claims 1 to 13, **characterised in that** the axial continuation (54; 154) is received at least partially (70; 170) in a complementary recess (56; 156) in the first system portion (10; 110) with a preferably circumferential mating fit.

15. Interface according to any one of claims 4 to 14, **characterised in that** the undercut shoulder portions (60; 160) formed by planar surfaces in each case cooperate with complementary pressing faces (62; 162) with a preferably planar contact being formed.

16. Interface according to any one of claims 1 to 14, **characterised in that** the drive spindle (30) has centrally a circumferential annular bead (76) which in the clamped state of the clamping elements (40, 46) engages with axial play SA in an end-side cross-shaped groove (74) of a fixing pin (72) which is received centrally in the first system portion (10) and which is preferably screwed in with such a depth (T) that in the released state of the clamping elements (40, 42) it still remains held in the cross-shaped groove (74).

17. Interface according to any one of claims 9 to 15, **characterised in that** the clamping elements (140, 142), which are in each case guided in a positive-locking manner in a circular-cylindrical hole (148) which is adjusted with respect to the interface axis (122), are secured by means of a guiding member (186) against torsion in the circular-cylindrical hole (148) in such a rotation position that the axes (132) of the respective threaded holes (136, 138) are in alignment with each other for the engagement of the opposing threaded portions (134L, 134R) of the drive spindle (130).

18. Interface according to claim 17, **characterised in that** the guiding member (186) additionally acts as a stop for the movement of the clamping elements (140, 142) directed away from the axis (122) of the interface.

19. Interface according to claim 17 or 18, **characterised in that** the guiding member (186) is formed by means of a fixing sleeve which is orientated so as to be axially in alignment with the centre axis (122) of the interface and which is pretensioned so as to be axially guided and resiliently urged (pressure spring 190) in the direction towards the clamping elements (140, 142) and which engages with cams (184) which are arranged to be diametrically offset with respect to each other in a guiding groove (180) of the clamping elements (140, 142).

20. Interface according to claim 19, **characterised in that** the guiding groove (180) is constructed in the clamping element (140, 142) in a claw-like continuation (178) which extends parallel with the axis (150) of the circular cylinder (149) which surrounds the clamping element (140, 142).

21. Interface according to claim 20, **characterised in that** the claw-like continuation (178) has a width (B178) which is slightly smaller than the width (B164) of a slot (164) which extends through the undercut shoulder portions (160) of the axial continuation (154).

22. Interface according to claim 20 or 21, **characterised in that** the guiding groove (180) has a consistent depth (T180) and forms radially at the inner side a wall portion (182) which in cooperation with the associated cam (184) of the guiding member (186) acts as a movement stop for the relevant clamping element (140, 142).

## Revendications

1. Interface entre deux modules de système (10, 20 ; 110, 120) d'un système d'outil, par exemple entre un outil à enlèvement de copeaux et un porte-outil ou une rallonge de porte-outil, avec une première partie de système (10 ; 110) présentant une cavité axiale, de préférence centrale (16 ; 116) avec un axe central (22), sur lequel peut être fixée, de préférence centrée sur une saillie (26; 126) en prise dans la cavité (16 ; 116) de préférence mécaniquement, une seconde partie de système (20 ; 120) au moyen d'un dispositif de serrage (30 à 64 ; 130 à 164), qui a deux éléments de serrage (40, 42 ; 140, 142) commandables en sens inverse au moyen d'une broche de commande orientée diamétralement (30 ; 130) et déplaçables dans la première partie de système (10 ; 110) mécaniquement dans des guides (48 ; 148), lesquels éléments, dans leur position de serrage disposée radialement à l'intérieur (Fig. 1, Fig. 6 ; Fig. 10, Fig. 15), s'appuient respectivement contre une section d'épaulement en contre-dépouille (60 ; 160) d'un prolongement axial (54 ; 154) raccordé à la saillie (26 ; 126) de manière résistante à la traction, dans laquelle le déplacement de desserrage des éléments de serrage (40, 42 ; 140, 142) est utilisé pour produire une force d'écartement pour écarter les modules de système (10, 20 ; 110, 120) l'un de l'autre, **caractérisée en ce que** les guides (48 ; 148) pour les éléments de serrage (40, 42 ; 140, 142) sont inclinés par rapport à l'axe (32 ; 132) de la broche de commande (30 ; 130) de sorte que la broche de commande (30 ; 130) puisse, lors du déplacement de desserrage des éléments de serrage (40, 42 ; 140, 142), se déplacer axialement dans la direction de l'axe central (22) pour transférer la force d'écartement sur la saillie (26, 54 ; 126, 154).

2. Interface selon la revendication 1, **caractérisé en ce que** la cavité est formée par un cône interne (16 ; 116) et la saillie par un axe conique complémentaire (26 ; 126), qui part d'une surface avant (24 ; 124) orientée de préférence radialement, qui peut être pressée contre une surface de butée avant (18 ; 118) de l'autre module de système (10 ; 110) lors du serrage conjoint des deux modules de système (10, 20 ; 110, 120) par évasement élastique de la section de module de système (10A ; 110A) formant la cavité (16 ; 116).

3. Interface selon la revendication 1 ou 2, **caractérisée en ce que** le prolongement axial (54 ; 154) est formé d'une partie sensiblement cylindrique circulaire concentrique avec la saillie (26 ; 126) et de diamètre réduit (épaulement 52 ; 152), sur laquelle des cavités entaillées (58 ; 158) de préférence nivelées décalées l'une de l'autre diamétralement sont formées pour constituer les sections de collerette en contredépouille (60; 160).

4. Interface selon la revendication 3, **caractérisée en ce que** les sections de collerette en contredépouille (60 ; 160) sont formées respectivement de surfaces planes éventuellement divisées.

5. Interface selon l'une quelconque des revendications 1 à 4, **caractérisée en ce que** le prolongement axial (54 ; 154) a une fente (64 ; 164) frontale s'étendant de manière diamétrale et sensiblement centrale à travers les sections de collerette en contredépouille (60; 160), à travers laquelle la broche de commande (30 ; 130) s'étend en ajustement avec jeu, dans laquelle le fond de la fente forme deux surfaces d'écartement (68 ; 168) se trouvant à la même distance de l'axe (22 ; 122) de la saillie (26 ; 126) pour la broche de commande (30 ; 130) afin de transférer la force d'écartement sur la saillie (26; 126).

6. Interface selon la revendication 5, **caractérisée en ce que** les surfaces d'écartement sont formées par des segments de surface d'enveloppe cylindrique (68 ; 168) qui s'adaptent, pour le transfert de la force d'écartement sur la saillie (26 ; 126), sur la surface externe de la broche de commande (30 ; 130), de préférence via un angle central d'environ 180° à plat.

7. Interface selon l'une quelconque des revendications 1 à 6, **caractérisée en ce que** la broche de commande (30 ; 130) a dans la position de serrage des éléments de serrage (40, 42 ; 140, 142) une distance axiale prédéterminée (S) vis-à-vis des surfaces d'écartement (68 ; 168).

8. Interface selon l'une quelconque des revendications 1 à 7, **caractérisée en ce que** les sections de collerette à contredépouille (60 ; 160) forment avec l'axe (32 ; 132) de la broche de commande (30; 130) un angle aigu (β).

9. Interface selon l'une quelconque des revendications 1 à 8, **caractérisée en ce que** les éléments (40, 42 ; 140 ; 142) sont traversés respectivement sensiblement au centre par un alésage taraudé (36, 38 ; 136, 138) pour la réception de sections filetées côté extrémité et en sens inverse (34L, 34R ; 134L, 134R) de la broche de commande (30; 130).

10. Interface selon l'une quelconque des revendications 1 à 9, **caractérisée en ce que** l'interface est formée de manière symétrique par rapport à un plan (plan de coupe des Fig. 4 et 11) contenant l'axe (22 ; 122) de la cavité et qui est perpendiculaire à l'axe (32 ; 132) de la broche de commande (30 ; 130).

11. Interface selon l'une quelconque des revendications 1 à 10, **caractérisée en ce que** les éléments de serrage (40, 42 ; 140, 142) sont guidés respectivement de manière mécanique dans un alésage cylindrique circulaire (48 ; 148).

12. Interface selon l'une quelconque des revendications 1 à 11, **caractérisée en ce que** la broche de commande (30 ; 130) forme à l'extrémité une cavité profilée ou à pans multiples (44, 46 ; 144, 146) pour recevoir un outil de commande.

13. Interface selon l'une quelconque des revendications 1 à 12, **caractérisée en ce que** le prolongement axial (54 ; 154) est formé d'un seul tenant avec la saillie (26 ; 126).

14. Interface selon l'une quelconque des revendications 1 à 13, **caractérisée en ce que** le prolongement axial (54 ; 154) est reçu au moins par sections (70 ; 170) dans une cavité complémentaire (56 ; 156) de la première partie de système (10 ; 110) avec un ajustement de jonction de préférence périphérique.

15. Interface selon l'une quelconque des revendications 4 à 14, **caractérisée en ce que** les sections de collerette en contredépouille (60 ; 160) formées par des surfaces planes coopèrent respectivement avec des surfaces de pression de forme complémentaire (62 ; 162) en assurant un contact de préférence à plat.

16. Interface selon l'une quelconque des revendications 1 à 14, **caractérisée en ce que** la broche de commande (30) présente au centre un bourrelet annulaire périphérique (76) qui s'engage à l'état serré des éléments de serrage (40 ; 46) avec un jeu axial SA dans une rainure frontale en croix (74) d'une tige de fixation (72) reçue, de préférence vissée dans la première partie de système (10) avec une profondeur (T) telle qu'elle reste encore captive dans la rainure en croix (74) à l'état desserré des éléments de serrage (40, 42).

17. Interface selon l'une quelconque des revendications 9 à 15, **caractérisée en ce que** les éléments de serrage (140, 142) qui sont guidés respectivement de manière mécanique dans un alésage cylindrique circulaire (148) réglé par rapport à l'axe d'interface (122), sont protégés au moyen d'un corps de guidage (186) à l'égard d'une rotation dans l'alésage circulaire cylindrique (148) dans une position de rotation telle que les axes (132) des alésages taraudés respectifs (136, 138) s'alignent l'un avec l'autre pour l'engagement des sections filetées en sens inverse (134L, 134R) de la broche de commande (130).

18. Interface selon la revendication 17, **caractérisée en ce que** le corps de guidage (186) sert en plus de butée pour le déplacement des éléments de serrage (140, 142) écarté de l'axe (122) de l'interface.

19. Interface selon la revendication 17 ou 18, **caractérisée en ce que** le corps de guidage (186) est formé par une douille de fixation orientée de niveau avec l'axe central (122) de l'interface, guidée axialement et précontrainte de manière élastique (ressort de compression 190) sur les éléments de serrage (140, 142), laquelle douille s'engage avec une came (184) agencée de manière décalée diamétralement dans respectivement une rainure de guidage (180) des éléments de serrage (140, 142).

20. Interface selon la revendication 19, **caractérisée en ce que** la rainure de guidage (180) de l'élément de serrage (140, 142) est formée dans un prolongement en forme de pince (178) qui s'étend parallèlement à l'axe (150) du cylindre circulaire (149) comprenant l'élément de serrage (140, 142).

21. Interface selon la revendication 20, **caractérisée en ce que** le prolongement en forme de pince (178) a une largeur (B178) qui est nettement plus petite que la largeur (B164) d'une fente (164) s'étendant à travers les sections de collerette en contredépouille (160) du prolongement axial (154).

22. Interface selon la revendication 20 ou 21, **caractérisée en ce que** la rainure de guidage (180) a une profondeur constante (T180) et forme radialement à l'intérieur une section de paroi (182) qui sert de butée de déplacement pour l'élément de serrage concerné (140, 142) en coopération avec la came connexe (184) du corps de guidage (186).
